# EUROPÄISCHE PATENTSCHRIFT

(11) **EP 1 254 019 B1**
(45) Veröffentlichungstag und Bekanntmachung des Hinweises auf die Patenterteilung: **13.10.2004**
(21) Anmeldenummer: 00902554.5
(22) Anmeldetag: 11.01.2000
(51) Int. Cl.: B29D 31/00, B29C 65/20, B29C 65/78, B65H 3/42

(54) **VERFAHREN UND VORRICHTUNG ZUM ZUSAMMENFÜGEN VON ABSCHNITTEN EINES THERMOPLASTISCHEN BAHNMATERIALS**
METHOD AND DEVICE FOR JOINING SECTIONS OF A THERMOPLASTIC CONTINUOUS WEB MATERIAL
PROCEDE ET DISPOSITIF PERMETTANT D'ASSEMBLER DES SECTIONS D'UN MATERIAU BANDE THERMOPLASTIQUE

(43) Veröffentlichungstag der Anmeldung: 06.11.2002
(73) Patentinhaber: Versacore Industrial Corporation, Kennett Square, PA 19348-1801 (US)
(72) Erfinder: HERING, Gerhard, Klaus, D-56235 Ransbach-Baumbach (DE)
(74) Vertreter: Brandenburg, Thomas, Dr.
(86) Internationale Anmeldenummer: PCT/DE2000/000070
(87) Internationale Veröffentlichungsnummer: WO 2001/051273

(56) Entgegenhaltungen:
- EP-A- 0 531 251
- WO-A-93/01048
- WO-A-98/42604
- CH-A- 684 589
- DE-A- 1 479 016
- DE-A- 19 830 380
- US-A- 3 675 522
- US-A- 4 992 132
- US-A- 5 102 485

## Beschreibung

Die Erfindung betrifft ein Verfahren zum Zusammenfügen einer Vielzahl von Abschnitten eines thermoplastischen Bahnmaterials, insbesondere eines Vliesmaterials aus thermoplastischen Kunstfasern, zu einem expandierbaren Block Die Erfindung betrifft auch eine Vorrichtung zum Zusammenfügen einer Vielzahl von Abschnitten eines thermoplastischen Bahnmaterials.

Die CH 684 589 offenbart Verfahren und Vorrichtung zum Vereinzeln von in einem stationären Bogenmagazin gestapelten Druckbogen. Die Vorrichtung umfaßt zwei distanzierte Scheiben, auf denen trommelförmige Mitnehmer 7 angebracht sind, die planetär angetrieben werden. Um die Mitnehmer ist ein Führungsband gespannt anliegend, daß mit den Mitnehmern reibungsschlüssig verbunden ist und dadurch den Transport des von einem Stapel abgezogenen Druckbogens zwischen Mitnehmer und Führungsband gewährleistet. Im Betrieb wird der Druckbogen durch den trommelförmigen Mitnehmer unter Wirkung von Saugnäpfen durch abschälen entnommen und vereinzelt.

Der Erfindung liegt die Aufgabe zugrunde, ein Verfahren zum Zusammenfügen von Abschnitten aus einem thermoplastischen Bahnmaterial, insbesondere einem thermoplastischen Kunstfaservlies, zu einem Block zu schaffen, der zu einem leichten Konstruktionswerkstoff weiterverarbeitet werden kann. Durch das Verfahren soll ein Block aus Abschnitten geschaffen werden, der mit geringem Aufwand ohne Verwendung von Klebstoff und ohne Faltprägungen des Bahnmaterials hergestellt und expandiert werden kann. Ferner soll eine Vorrichtung zur Herstellung eines expandierbaren Blocks aus Abschnitten geschaffen werden, die hohe Produktionsgeschwindigkeiten erlaubt. Weitere Vorteile der Erfindung ergeben sich aus der folgenden Beschreibung.

Diese Aufgabe wird bei dem eingangs genannten Verfahren erfindungsgemäß dadurch gelöst, daß man
a) einen ersten Abschnitt mit Abstand in eine Parallellage
   zu dem letzten Abschnitt des gebildeten Blocks bringt, b) einander gegenüberliegende erste Streifen auf den Oberflächen des ersten und letzten Abschnitts auf die Schweißtemperatur des Materials erwärmt,
c) den ersten Abschnitt und den letzten Abschnitt des Blocks so zusammenführt, daß die ersten Streifen beider Abschnitte aufeinandertreffen, und den ersten Abschnitt durch Andrücken mit dem letzten Abschnitt verschweißt
d) einen zweiten Abschnitt zu dem ersten Abschnitt in eine Parallellage bringt, in der sich ihre Flachseiten gegenüberliegen,
e) auf den Oberflächen des ersten und zweiten Abschnitts einander gegenüberliegende zweite Streifen, die gegenüber den ersten Streifen um etwa die zweifache Streifenbreite versetzt sind, auf die Schweißtemperatur des Materials erwärmt,
f) den zweiten Abschnitt und den ersten Abschnitt zusammenführt, so daß die zweiten Streifen aufeinandertreffen, und den zweiten Abschnitt durch Andrücken mit dem ersten Abschnitt verschweißt, und
g) die Stufen a) bis f) mit weiteren Abschnitten vielfach wiederholt.

Durch das Verfahren wird ein expansionsfähiges Hobe-Material ohne Verwendung von Klebstoff und ohne Prägefaltungen des Bahnmaterials geschaffen. Das Verfahren eignet sich zur Erreichung hoher Produktionsgeschwindigkeiten. Dem Verfahren kann die Bildung der einzelnen zusammenzufügenden Abschnitte aus einer Bahn vorgeschaltet werden. Man kann jedoch auch von den Abschnitten direkt ausgehen, wenn diese als solche angeliefert werden. Verfahrensprodukt ist das Hobe-Material, das wegen seines geringen Raumbedarfs an einen Weiter-oder Endverarbeiter geliefert wird. Selbstverständlich ist es auch möglich, das Hobe-Material im Anschluß an die erfindungsgemäße Herstellung direkt zu expandieren. Durch das erfindungsgemäße Verfahren wird der Hobe-Material-Block durch taktweise Addition von Abschnitten gebildet, wobei sein Querschnitt durch die Abschnittsgröße bestimmt ist. Die Breite des Materials (entsprechend der Breite des ursprünglichen Bahnmaterials) kann bis zu 5,20 m oder mehr betragen. Die Höhe des erzeugten Blocks entspricht der frei wählbaren Breite der Bahnabschnitte.

Nach der bevorzugten Ausführungsform des erfindungsgemäßen Verfahrens werden in den Stufen c) und f) der zu addierende Abschnitt und der aus den Abschnitten gebildete Block zu ihrer Zusammenführung entgegengerichtet aufeinander zu bewegt. Dadurch steht für die anschließende Kontaktierung und Verschweissung eine längere Andruckzeit zur Verfügung, was für die Verschweissung vorteilhaft ist.

Nach der bevorzugten Ausführungsform des erfindungsgemäßen Verfahrens bewegt man in den Stufen c) und f) den addierten Abschnitt und den aus den Abschnitten gebildeten Block während und/oder nach ihrer Kontaktierung um die Dicke eines Abschnitts gleichgerichtet in Produktionsrichtung. Gleichzeitig mit der Addition eines Abschnitts wird somit der Block um die Dicke eines Abschnitts in Produktionsrichtung weiterbewegt.

Vorzugsweise hält man den gebildeten Abschnittsblock unter einem zur Produktionsrichtung senkrechten Klemmdruck. Dieser Klemmdruck erstreckt sich über den vorderen Bereich des Blocks, in dem die Blockbildung erfolgt. Der Klemmdruck ist einstellbar und ermöglicht so die Einstellung des beim Andrücken und Verschweissen des neuen Abschnitts an dem Block erreichbaren Schweißdruck.

Zweckmäßigerweise erwärmt man zur Bildung eines expandierten Wabenmaterials den durch die Stufen a) bis g) gebildeten Block bis zu seiner Formbarkeit und expandiert ihn dann senkrecht zu seinen Abschnitten, d.h. in Produktionsrichtung.

Überraschenderweise hat sich gezeigt, daß der Hobe-Material-Block schon kurz nach seiner Bildung unter Erwärmung expandiert werden kann, ohne daß dadurch die Schweißflächen reissen oder anderweitig beeinträchtigt werden. Dabei erfolgt die Erwärmung zur Formbarkeit zwecks Expansion auf eine Temperatur, die erheblich unterhalb der Schweißtemperatur liegt. Bei einem Vliesmaterial aus Polypropylenfasern beispielsweise genügt eine Erwärmung auf 75 bis 85°C, während die Schweißtemperatur oberhalb von 120°C, z.B. bei 165°C liegt.

Vorzugsweise erwärmt man den gebildeten Block durch Infrarotstrahlung. Dabei erfolgt die Erwärmung vorteilhaft in einem Bereich des Blocks, in dem dieser schon teilweise expandiert ist. Die Wärmestrahlung (oder ein anderer Wärmeträger) ist in die durch die Teilexpansion gebildeten Zwischenräume gerichtet, so daß eine ziemlich gleichmäßige Erwärmung im gesamten Blockquerschnitt erreicht wird.

Vorzugsweise transportiert man die Abschnitte auf einer kreisbogenförmigen Bahn taktweise in die Schweißposition vor dem aus den Abschnitten gebildeten Block. Auf diese Weise können mehrere Abschnitte auf einem Rotor hintereinander transportiert und hohe Produktionsgeschwindigkeiten erreicht werden.

Die Aufgabe wird ferner durch eine Vorrichtung zum Zusammenfügen einer Vielzahl von Abschnitten eines thermoplastischen Bahnmaterials zu einem expandierfähigen Block gelöst, die erfindungsgemäß gekennzeichnet ist durch
ein Durchlaufmagazin zur Aufnahme des aus den Abschnitten gebildeten Blocks und einen vor dem Durchlaufmagazin angeordneten Rotor mit mehreren, über den Rotorumfang verteilten Stationen aus
a) einem über die Abschnittsbreite reichenden Abschnittsträger,
b) einer dem Abschnittsträger zugeordneten Streifenheizeinrichtung, die zwischen einer Position vor dem Abschnittsträger und einer von dem Abschnittsträger zurückgezogenen Position verfahrbar ist, und
c) einer dem Abschnittsträger zugeordneten Andruckeinrichtung. Vorzugsweise ist die Andruckeinrichtung in Rotordrehrichtung hinter dem Abschnittsträger angeordnet.

Der Rotor ist zwischen dem Durchlaufmagazin und einer Übernahmestation angeordnet. Er übernimmt an der stationären Übernahmestation jeweils einzelne fertig zugeschnittene Abschnitte und transportiert diese vor das Durchlaufmagazin, das den bereits gebildeten Block enthält. In dieser Position vor dem Durchlaufmagazin erfolgt die Verschweißung des herantransportierten Abschnitts mit dem zuvor aus den Abschnitten gebildeten Block. Die auf dem Rotor angeordneten Stationen haben eine mehrfache Funktion. Sie übernehmen und transportieren jeweils einzelne Abschnitte in die Schweißposition vor dem Durchlaufmagazin. Sie erhitzen die einander gegenüberliegenden Flächen des letzten verblockten Abschnitts und des herantransportierten, vor dem verblockten Abschnitt positionierten Abschnitts, und sie bewirken das Andrücken des vor dem Block positionierten Abschnitts an den Block.

Nach der bevorzugten Ausführungsform der erfindungsgemäßen Vorrichtung ist der Rotor mit einer geraden Anzahl von Stationen bestückt und sind die Streifenheizeinrichtungen von einer Station zur nächsten Station axial hin und her versetzt. Hierdurch können die im Block aufeinanderfolgenden Abschnitte mit entsprechend versetzten Schweißstreifen versehen werden. Der Hobe-Block kann dann durch Expansion zu einem Wabenmaterial mit gleichseitigsechseckigem Wabenquerschnitt expandiert werden. Die gerade Anzahl der Stationen auf dem Rotor kann je nach Größe des Rotors frei gewählt werden; sechs oder acht Stationen sind z.B. eine zweckmäßige Anzahl. Der Versatz der Streifenheizeinrichtungen benachbarter Stationen ist bei der Herstellung von Wabenmaterial gleich der doppelten Breite des Schweißstreifens. Die Andruckeinrichtungen können sich über die gesamte Breite des Abschnittsträgers erstrecken. Sie können aber auch nur auf der Breite der Schweißstreifen andrücken. In diesem Falle sind die Andruckeinrichtungen ebenso wie die Streifenheizeinrichtungen von Station zu Station hin und her versetzt.

Nach der bevorzugten Ausführungsform sind in den pneumatisch arbeitenden Abschnittsträgern Bohrungen ausgebildet, die an eine Unterdruckquelle anschließbar sind. An der Übernahmestation wird ein Abschnitt von dem Abschnittsträger angesaugt und so übernommen. In der Schweißposition vor dem Durchlaufmagazin wird nach erfolgter Erhitzung der Abschnitte durch die Streifenheizeinrichtung der Unterdruck abgeschaltet, so daß der Abschnitt von dem Abschnittsträger freigegeben und unmittelbar danach durch die Andruckeinrichtung an den Block angedrückt und damit verblockt werden kann.

Zweckmäßigerweise bestehen die Streifenheizeinrichtungen aus einer Vielzahl kammartig ausgebildeter Heizelemente, die von Station zu Station um die zweifache Breite des Schweißstreifens gegeneinander versetzt sind. Die Streifenheizeinrichtungen auf dem Rotor können gegen andere Heizeinrichtungen mit anderer Breite und dementsprechend anderem Abstand der kammartigen Heizelemente austauschbar sein. Auf diese Weise kann die Wabengröße verändert werden.

Vorzugsweise sind die Andruckeinrichtungen als Walzen ausgebildet. Die Walzen können mit einstellbarer Federlagerung versehen sein, so daß der Andruck längs der Schweißstreifen entsprechend der Klemmung des Blocks in dem Durchlaufmagazin verändert werden kann.

Wenn aus dem Hobe-Material ein expandiertes Wabenmaterial erzeugt werden soll, sind dem Durchlaufmagazin eine Erwärmungseinrichtung und wenigstens ein Expansionswalzenpaar nachgeschaltet. Die Erwärmungseinrichtung kann ein einseitig oder zweiseitig einwirkender Infrarotstrahler sein. Zweckmäßigerweise erfolgt die Wärmestrahlung in Richtung der Schweißstreifen bzw. nach Teilexpansion in Richtung der gebildeten Kanäle. Die Expansionswalzen sind zweckmäßig Bürstenwalzen oder mit einem anderen nachgiebigen Material bekleideten Walzen, die den expandierten Block ohne Beschädigung erfassen können.

Eine Ausführungsform der erfindungsgemäßen Vorrichtung wird nun an Hand der Zeichnung näher beschrieben. Es zeigen
- Figur 1: die Gesamtansicht der Vorrichtung in schematischer Darstellung;
- Figur 2: die Frontansicht der kammartigen Streifenheizeinrichtung in vergrößertem Maßstab; und
- Figur 3: ein Photo des erzeugten Blocks in der Expansionsphase.

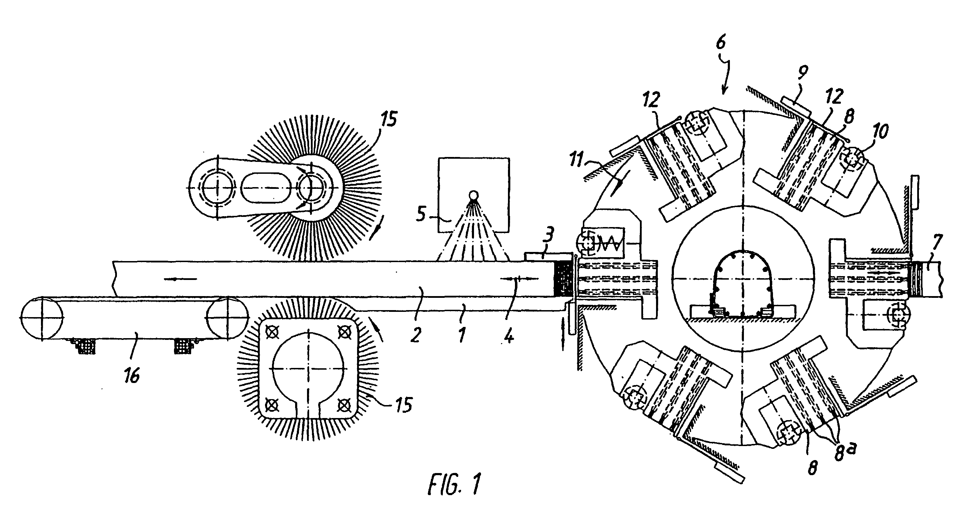

Figur 1 zeigt einen Tisch 1 für die Führung eines erfindungsgemäß hergestellten Hobe-Material-Blocks 2. Am vorderen Ende des Tisches 1 befindet sich ein Durchlaufmagazin 3 mit einer Klemmeinrichtung (nicht dargestellt), durch die der Block 2 unter einen einstellbaren, senkrecht zur Produktionsrichtung wirkenden Klemmdruck gesetzt werden kann. Der Tisch 1 mit dem Durchlaufmagazin 3 ist durch eine Mechanik (nicht dargestellt) in Richtung der Pfeile 4 antriebsmäßig hin und her verschiebbar. In Produktionsrichtung hinter dem Durchlaufmagazin 3 ist ein auf die Oberseite des Hobe-Blocks 2 gerichteter Infrarotstrahler 5 angeordnet, durch den der Block 2 auf die Verformungstemperatur erwärmt werden kann. In der Produktionsrichtung hinter dem Tisch 1 ist ein Expansionswalzenpaar 15 angeordnet, das mit dem Block in Eingriff ist und diesen von dem Durchlaufmagazin 3 unter Expansion abzieht. Bei der dargestellten Ausführungsform sind die Expansionswalzen 15 als Borstenwalzen ausgebildet. Der Abstand der oberen Walze von der unteren Walze 15 ist entsprechend der Höhe des Blocks 2 und der gewünschten Andruckkraft einstellbar. In Produktionsrichtung hinter dem Expansionswalzenpaar 15 ist ein Förderband 16 angeordnet, das den expandierten Block übernimmt und abtransportiert.

Zwischen dem Durchlaufmagazin 3 und einem Abschnittmagazin 7 ist ein über die gesamte Abschnittsbreite reichender Rotor 6 drehbar gelagert. Der Rotor ist mit einem taktweise arbeitenden Antrieb (nicht dargestellt) verbunden. Er trägt auf seinem Umfang gleichmäßig verteilt sechs Stationen, durch die jeweils ein Bahnabschnitt transportiert, mit Schweißstreifen versehen und vor dem Durchlaufmagazin 3 an den Block 2 angedrückt wird. Jede Station umfaßt im wesentlichen drei Aggregate, nämlich einen radial verschiebbaren, balkenförmigen Abschnittsträger 8, eine vor dem Abschnittsträger 8 tangential verschiebbare Streifenheizeinrichtung 9 und eine walzenartige Andruckeinrichtung 10. Die drei Aggregate erstrecken sich im wesentlichen über die gesamte Breite (senkrecht zur Zeichenebene) des Rotors 6. Die Verschiebungen der Abschnittsträger 8 und der kammförmigen Streifenheizeinrichtungen 9 erfolgen durch pneumatische Antriebe (nicht dargestellt) und werden zentral gesteuert. Die Andruckeinrichtung 10 besteht im allgemeinen aus einer federbelasteten Walze, die im Zuge der Rotordrehung den mit Schweißstreifen versehenen Abschnitt von oben nach unten an den Hobe-Block 2 andrückt und damit die Verschweissung mit dem Block vervollständigt.

Die Arbeitsweise dieser Vorrichtung ist wie folgt: Vor dem Abschnittsmagazin 7 wird bei zurückgezogener Streifenheizeinrichtung 9 der Abschnittsträger 8 aktiviert, wodurch ein Abschnitt aus dem Abschnittsmagazin 7 von dem Träger 8 übernommen wird. Während der Drehung des Rotors 6 in Richtung des Pfeils 11 wird bereits die Streifenheizeinrichtung 9 ausgefahren, so daß der übernommene Abschnitt zwischen dem Abschnittsträger 8 und den kammartigen Elementen der Heizeinrichtung 12 liegt. Dabei ist der Abschnittsträger 8 in einer von der Streifenheizeinrichtung 9 zurückgefahrenen Position. Sobald sich diese Station nach drei Takten vor dem Durchlaufmagazin 3 befindet, werden der Abschnittsträger 8 mit dem Abschnitt einerseits und der Tisch I mit dem Durchlaufmagazin 3 und dem Block 2 andererseits soweit aufeinander zu bewegt, daß sie von der kammförmigen Streifenheizeinrichtung 9 kontaktiert werden können. Nun wird die kammförmige Streifenheizeinrichtung 9 zwischen dem Abschnitt an dem Abschnittsträger 8 und dem Block 2 zurückgezogen, wobei durch Kontaktierung die Schweißstreifen auf den einander gegenüberliegenden Flächen des Abschnitts und des Blocks 2 erzeugt werden. Schließlich werden der Abschnittsträger 8 mit dem Abschnitt und das Durchlaufmagazin 3 mit dem Block 2 weiter aufeinander zu bewegt, bis die Schweißstreifen aufeinandertreffen. Anschließend fahren der Abschnittsträger 8 und das Durchlaufmagazin 3 wieder auseinander, und der Rotor 6 wird weitergetaktet. Dabei fährt dann die Walze der Andruckeinrichtung 10 dieser Station über den verschweißten Abschnitt, wodurch ein erneuter Andruck und ein Vorschub des Blocks 2 um die Dicke des Abschnitts erzeugt werden. Diese Vorgänge wiederholen sich, sobald die nächste Station des Rotors vor dem Block 2 steht.

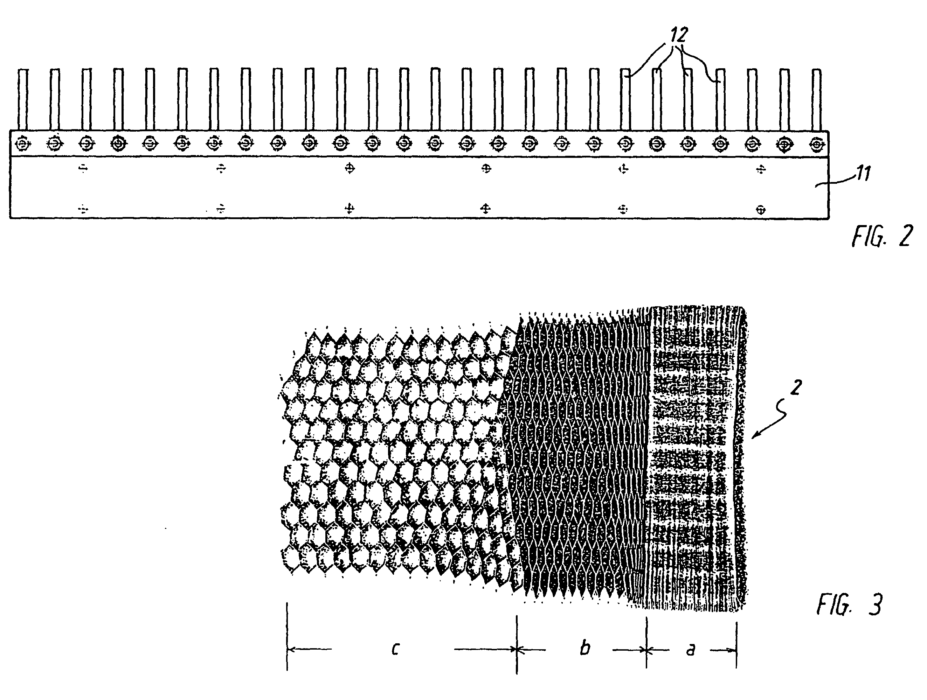

Figur 2 zeigt die Stirnansicht der Streifenheizeinrichtung 9 deren kammartige Heizelemente 12 elektrisch auf die zur Verschweißung der Abschnitte erforderliche Temperatur erhitzt werden.

Das in Figur 3 abgebildete Photo zeigt den Block 2 beim Übergang von dem nicht-expandierten Zustand (Hobe-Material) im Bereich a über einen teilexpandierten Zustand im Bereich b in einen im wesentlichen vollständig expandierten Zustand im Bereich c. Die Erwärmung durch den Infrarotstrahler 5 erfolgt wenigstens teilweise im Bereich b, so daß die Wärmestrahlung auch in das Innere des Blocks 2 gelangen kann.

### Bezugszeichenliste

- 1.: Tisch
- 2.: Block
- 3.: Durchlaufmagazin
- 4.: Pfeile
- 5.: Infrarotstrahler
- 6.: Rotor
- 7.: Abschnittsmagazin
- 8.: Abschnittsträger
- 9.: Einrichtung (Schweißeinrichtung)
- 10.: Andruckeinrichtung
- 11.: Pfeil
- 12.: Heizelemente
- 13.: entfällt
- 14.: entfällt
- 15.: Walze
- 16.: Förderband

## Patentansprüche

1. Eine Vorrichtung zum Zusammenfügen einer Vielzahl von Abschnitten eines Bahnmaterials zur Formung eines Blocks (2), umfassend
einen Rotor (6) mit mehreren, über den Rotorumfang verteilten Stationen zum Anordnen eines an den Block (2) hinzuzufügenden Abschnittes in einer aneinanderliegenden Oberfläche-zu-Oberfläche Relation, mit einem Abschnitt, der zuvor dem Block (2) hinzugefügt wurde; und
eine Einrichtung (9) zum gleichzeitigen Bilden vieler vereinzelter, länglicher und beabstandeter Verbindungen zwischen dem Abschnitt, der dem Block (2) hinzugefügt wird und dem Abschnitt, der zuvor dem Block (2) hinzugefügt wurde, wobei die Einrichtung (9) von dem Rotor (6) mit mehreren über den Rotorumfang verteilten Stationen umfaßt ist, zum Greifen sowie Drehen entlang der Längserstreckung wenigstens eines der Abschnitte der an den Block (2) hinzugefügt wird, sowie des Abschnitts der zuvor an den Block (2) angeschweißt wurde, um eine Vielzahl von drehenden Kontaktbereichen bereitzustellen, bei denen wenigstens teilweise die Verbindungen gebildet werden, sowie der Abschnitt, der an den Block (2) zugefügt wird sowie der Abschnitt der zuvor dem Block (2) zugefügt wurde, sich in einer aneinanderliegenden Oberfläche-zu-Oberfläche Relation befinden
**dadurch gekennzeichnet daß**
die Abschnitte aus einem thermoplastischen Material bestehen und die Einrichtung (9) eine Schweißeinrichtung (9) ist, so das der Abschnitt, der dem Block (2) hinzugefügt wird und der Abschnitt, der zuvor dem Block (2) hinzugefügt wurde miteinander verschweißt werden und sich hierbei in einer aneinanderliegenden Oberfläche-zu-Oberfläche Relation befinden, so daß jede der Verschweißungen eine längliche Erstreckung aufweist und die Verschweißungen jeweils voneinander lateral beabstandet sind und weiterhin gilt, dass der fertige Block (2) expandiert werden kann.

2. Vorrichtung nach Anspruch 1 **dadurch gekennzeichnet, daß** der Transportmechanismus des Rotors (6) und die Schweißeinrichtung (9) so angeordnet sind, daß die Längserstreckung im Wesentlichen aufrecht ist.

3. Vorrichtung nach Anspruch 1, **dadurch gekennzeichnet**, das
der Rotor (6) den Abschnitt, der dem Block (2) hinzugefügt werden soll, in vereinzelter, aneinanderliegender Oberfläche-zu-Oberfläche Relation an den Abschnitt, der zuvor an den Block (2) angeschweißt wurde, anordnet,
wobei die Schweißeinrichtung (9) weiterhin eine Vielzahl von Heizelementen (12) beinhaltet, die so angebracht sind, daß sie in dem Zwischenraum zwischen dem Abschnitt, der zu dem Block (2) hinzugefügt werden soll und dem Abschnitt, der zuvor an den Block (2) angeschweißt wurde, positioniert sind, während der Abschnitt, der dem Block (2) hinzugefügt werden soll, und der Abschnitt, der zuvor an den Block (2) angeschweißt wurde, sich in einer vereinzelnden, beabstandeten, aneinanderliegenden Oberfläche-zu-Oberfläche Relation befindet,
wobei weiterhin die Vorrichtung so gestaltet ist, daß die Heizelemente (12) in Eingriff treten mit wenigstens einem von jeweils dem Abschnitt, der an den Block (2) zugefügt werden soll und dem Abschnitt, der zuvor an den Block (2) angeschweißt wurde, um Streifen des Abschnitts, der sich im Eingriff mit den Heizelementen (12) befindet, auf wenigstens die Schweißtemperatur des Abschitts zu erhitzen, während die Heizelemente (12) in dem Zwischenraum zwischen dem Abschnitt, der an den Block (2) zugefügt werden soll und dem Abschnitt, der zuvor an den Block (2) angeschweißt wurde, angeordnet sind, und
der Schweißeinrichtung (9) in der Lage ist, Schweißnähte zwischen dem Abschnitt der dem Block (2) hinzugefügt werden soll und dem Abschnitt, der zuvor an den Block (2) angeschweißt wurde, an den jeweiligen Positionen der erhitzten Streifen zu formen.

4. Vorrichtung nach Anspruch 3 **dadurch gekennzeichnet, daß** die Heizelemente (12) für eine Hinund-Her-Bewegung, relativ zu dem Transportmechanismus des Rotors (6), gestaltet sind.

5. Vorrichtung nach Anspruch 3, **dadurch gekennzeichnet**,
das die Vorrichtung so gestaltet ist, daß die Heizelemente (12) gleichzeitig sowohl mit dem Abschnitt, der an den Block (2) hinzugefügt wird, als auch mit dem Abschnitt der zuvor an den Block (2) angeschweißt wurde in Eingriff treten, um so Streifen auf sowohl den Abschnitt der an den Block (2) zugefügt werden soll als auch den Abschnitt, der zuvor an den Block (2) angeschweißt wurde, auf wenigstens die Schweißtemperatur erhitzt,
wobei die Heizelemente (12) im Zwischenraum zwischen den Abschnitten angeordnet sind.

6. Vorrichtung nach Anspruch 5, **dadurch gekennzeichnet**, das die Heizelemente (12) für eine Hin-und-Her-Bewegung, relativ zu dem Transportmechanismus des Rotors (6), gestaltet sind.

7. Ein Verfahren zum Zusammenfügen einer Vielzahl von Abschnitten eines thermoplastischen Materials, um einen Block (2) zu bilden, umfassend:
a) Positionieren eines Abschnitts, der an den Block (2) hinzugefügt werden soll, in einer aneinanderliegenden Oberfläche-zu-Oberfläche Relation mit einem Abschnitt, der zuvor an den Block (2) hinzugefügt wurde;
b) Erhitzen erster Streifen auf wenigstens die Schweißtemperatur der Abschnitte, wobei sich die ersten Streifen jeweils auf den gegenüberliegenden Oberflächen des Abschnitts, das an den Block (2) hinzugefügt wird, und des Abschnitts, das zuvor an den Block (2) hinzugefügt wurde, befinden;
c) Zusammenpressen der Oberflächen des Abschnitts, der an den Block (2) hinzugefügt wird sowie des Abschnitts, der zuvor an den Block (2) hinzugefügt wurde, so daß die ersten Streifen des Abschnitts, der zuvor an den Block (2) hinzugefügt wird sowie die ersten Streifen des Abschnitts, der an den Block (2) hinzugefügt wurde sich jeweils treffen und wobei der Abschnitt, der dem Block (2) hinzugefügt wird und der Abschnitt, der dem Block (2) zuvor hinzugefügt wurde, miteinander thermisch verschmolzen werden und der Abschnitt, der dem Block (2) hinzugefügt wird, der letzte zuvor an den Block (2) hinzugefügte Abschnitt wird;
d) Positionieren eines Abschnitts, der dem Block (2) hinzugefügt werden soll, in einer aneinanderliegenden Oberfläche-zu-Oberfläche Relation mit einem Abschnitt, der zuvor an den Block (2) hinzugefügt wurde;
e) Erhitzen zweiter Streifen auf wenigstens die Schweißtemperatur der Abschnitte, wobei sich die zweiten Streifen jeweils auf den gegenüberliegenden Oberflächen des Abschnitts, der an den Block (2) hinzugefügt wird, und dem Abschnitt, der zuvor an den Block (2) hinzugefügt wurde, befinden;
f) Zusammenpressen der Oberflächen des Abschnitts, der an den Block (2) hinzugefügt wird sowie des Abschnitts, der zuvor an den Block (2) hinzugefügt wurde, so daß die zweiten Streifen des Abschnitts, der an den Block (2) hinzugefügt wird sowie die zweiten Streifen des Abschnitts, der zuvor an den Block angeschweißt wurde, sich jeweils treffen und wobei der Abschnitt, der dem Block (2) hinzugefügt wird und der Abschnitt, der dem Block zuvor hinzugefügt wurde, miteinander thermisch verschmolzen werden und dem Abschnitt, der an den Block (2) hinzugefügt wird, der Abschnitt wird, der als letztes an den Block (2) hinzugefügt wurde, wird;
g) Kontinuierliches Wiederholen der Schritte a) bis f) mit vielen weiteren Abschnitten.

8. Verfahren nach Anspruch 7 **dadurch gekennzeichnet, daß** es das Erhitzen des Blocks (2) zu wenigstens dem Punkt der plastischen Verformung und Expandierung des Blocks (2), um den Block (2) in ein Wabenmaterial umzuwandeln, umfaßt.

9. Verfahren nach Anspruch 7 **dadurch gekennzeichnet, daß** die Abschnitte thermoplastische Vliesgewebe umfassen.

10. Verfahren nach Anspruch 7 **dadurch gekennzeichnet, daß** das Zusammenpressen der Oberflächen des Abschnitts, der an den Block (2) hinzugefügt wird und des Abschnitts, der zuvor an den Block (2) hinzugefügt wurde, das Einwirken eines Rotors (6) gegen und zu dem gleichen Zeitpunkt das Drehen des Rotors (6) über wenigstens Eines von den Abschnitten hinweg, die zu dem Block hinzugefügt werden sollen oder des Abschnitts, der zuvor zu dem Block (2) hinzugefügt wurde, beinhaltet.

11. Ein Verfahren nach Anspruch 10 **dadurch gekennzeichnet, daß** die Abschnitte thermoplastische Vliesfasern umfassen.

## Claims

1. A device for joining a plurality of portions of a continuous material for forming a block (2), comprising
a rotor (6) with several stations distributed about its circumference for arranging a portion to be added to the block (2) in an adjoining surface-to-surface relationship with a portion which was previously added to the block (2); and
an apparatus (9) for simultaneously forming many discrete, longish and spaced-apart connections between the portion which is being added to the block (2) and the portion which was previously added to the block (2), whereby the apparatus (9) is comprised of the rotor (6) with several stations distributed about its circumference, for gripping and rotating, along the longitudinal stretch, at least one of the portions which is being added to the block (2) as well the portion which was previously welded to the block (2), in order to provide a plurality of rotating contact areas, where the connections are formed at least partially, and where the portion which is being added to the block (2) as well as the block which was previously added to the block (2), find themselves in an adjoining surface-to-surface relationship,
**characterised in that**
the portions consist of a thermoplastic material and the apparatus (9) is a welding apparatus (9) so that the portion which is being added to the block (2) and the portion which was previously added to the block (2) are welded together and thereby find themselves in an adjoining surface-to-surface relationship so that each of the welds has an longish stretch and the welds are each laterally spaced apart from one another, and that it is furthermore true to say that the finished block (2) can be expanded.

2. The device according to claim 1 **characterised in that** the transport mechanism of the rotor (6) and the welding apparatus (9) are arranged such that the longish stretch is essentially upright.

3. The device according to claim 1 **characterised in that** the rotor (6) arranges the portion to be added to the block (2) in a discrete adjoining surface-to-surface relationship next to the portion which was previously welded to the block (2),
whereby the welding apparatus (9) furthermore includes a plurality of heating elements (12) which are attached such that they are positioned in the space between the portion which is to be added to the block (2) and the portion which was previously welded to the block (2), whereas the portion which is to be added to the block (2) and the portion which was previously welded to the block (2) find themselves in a discrete, spaced apart, adjoining surface-to-surface relationship,
whereby furthermore the device is constructed in such a way that the heating elements (12) are meshing with at least one of the respective portion which is to be added to the block (2) and the portion which was previously welded to the block (2), in order to heat strips of the portion which is meshing with the heating elements (12) to at least the welding temperature of the portion, whereas the heating elements (12) are arranged in the space between the portion which is to be added to the block (2) and the portion which was previously welded to the block (2); and
the welding apparatus (9) is able to form welds between the portion which is to be added to the block (2) and the portion which was previously welded to the block (2) at the respective positions of the heated strips.

4. The device according to claim 3 **characterised in that** the heating elements (12) are designed to perform a to-and-fro movement relative to the transport mechanism of the rotor (6).

5. The device according to claim 3 **characterised in that** the device is designed such that the heating elements (12) are simultaneously meshing with both the portion which is being added to the block (2) and the portion which was previously welded to the block (2), in order to heat strips of both the portion which is to be added the block (2) and of the portion which was previously welded to the block (2) to at least the welding temperature,
whereby the heating elements (12) are arranged in the space between the portions.

6. The device according to claim 5 **characterised in that** the heating elements (12) are designed to perform a to-and-fro movement relative to the transport mechanism of the rotor (6).

7. A method for joining a plurality of portions of a thermoplastic material in order to form a block (2), comprising:
a) positioning a portion which is to be added to the block (2) in an adjoining surface-to-surface relationship with a portion which was previously added to the block (2);
b) heating first strips to at least the welding temperature of the portions, whereby the first strips find themselves on the opposing surfaces of the portion which is being added to the block (2) and the portion which was previously added to the block (2);
c) pressing together the surfaces of the portion which is being added to the block (2) and of the portion which was previously added to the block (2), so that the first strips of the portion which was previously added to the block (2) and the first strips of the portion which was added to the block (2) meet up with each other respectively, and whereby the portion which is being added to the block (2) and the portion which was previously added to the block (2) are thermally fused together, and the portion which is being added to the block (2) is the last portion previously added to the block (2);
d) positioning a portion which is to be added to the block (2) in an adjoining surface-to-surface relationship with a portion which was previously added to the block (2);
e) heating second strips to at least the welding temperature of the portions whereby the second strips find themselves on opposing surfaces of the portion which is being added to the block (2) and the portion which was previously added to the block (2);
f) pressing together the surfaces of the portion which is being added to the block (2) and the portion which was previously added to the block (2), so that the second strips of the portion which is been added to the block (2) and the second strips of the portion which was previously welded to the block meet up with each other respectively, and whereby the portion which is being added to the block (2) and the portion which was previously added to the block are thermally fused together and the portion which is being added to the block (2) is the last portion previously added to the block (2);
g) continuously repeating the steps a) to f) with many further portions.

8. The method according to claim 7 **characterised in that** it comprises heating the block (2) to at least the point of the plastic deformation and expansion of the block (2) in order to transform the block (2) into a honeycomb material.

9. The method according to claim 7 **characterised in that** the portions comprise thermoplastic fleece fabrics.

10. The method according to claim 7 **characterised in that** the pressing together of the surfaces of the portion which is being added to the block (2) and the portion which was previously added to the block (2) includes a rotor (6) impacting against and, at the same point in time, rotating past at least one of the portions which are to be added to the block or the portion which was previously added to the block (2).

11. The method according to claim 10 **characterised in that** the portions comprise thermoplastic fleece fibres.

## Revendications

1. Dispositif d'assemblage d'une pluralité de sections d'un matériau folié pour former un bloc (2), comprenant
un rotor (6) avec plusieurs postes répartis autour dudit rotor pour superposer la surface supérieure d'une section qui est ajoutée au bloc (2) à la surface supérieure d'une section qui a été préalablement ajoutée au bloc (2) ; et
un dispositif (9) pour former en même temps des jonctions isolées, allongées et espacées entre la section qui est ajoutée au bloc (2) et la section qui a été préalablement ajoutée au bloc (2), dans lequel le dispositif (9) est constitué du rotor (6) avec plusieurs postes répartis autour dudit rotor, pour contacter et faire pivoter le long de la surface longitudinale au moins une des sections qui est ajoutée au bloc (2), ainsi que la section qui a été préalablement soudée au bloc (2), pour produire une pluralité de zones de contact pivotantes, sur lesquelles au moins une partie des jonctions est formée, ainsi que la section qui est ajoutée au bloc (2) et la section qui a été préalablement ajoutée au bloc (2), les surfaces supérieures desdites sections se superposant l'une l'autre, **caractérisé en ce que**
les sections sont constituées d'un matériau thermoplastique et le dispositif (9) est un dispositif de soudure (9), de telle sorte que la section qui est ajoutée au bloc (2) et la section qui a été préalablement ajoutée au bloc (2) soient soudées l'une à l'autre et que leurs surfaces supérieures se superposent ainsi l'une à l'autre, de telle sorte que chacune des soudures présente une surface allongée et que les soudures soient espacées latéralement l'une de l'autre, de manière à ce que le bloc terminé (2) puisse par la suite être agrandi.

2. Dispositif selon la revendication 1, **caractérisé en ce que** le mécanisme de transport du rotor (6) et le dispositif de soudure (9) sont agencés de telle sorte que la surface longitudinale soit essentiellement verticale.

3. Dispositif selon la revendication 1, **caractérisé en ce que**
le rotor (6) superpose de manière isolée la surface supérieure de la section qui doit être ajoutée au bloc (2) à la surface supérieure de la section qui a été préalablement soudée au bloc (2),
dans lequel le dispositif de soudure (9) comporte en outre une pluralité d'éléments de chauffage (12), qui sont disposés de manière à se positionner dans l'intervalle entre la section qui doit être ajoutée au bloc (2) et la section qui a été préalablement soudée au bloc (2), alors que la surface supérieure de la section qui doit être ajoutée au bloc (2) se superpose de manière isolée et espacée à la surface supérieure de la section qui a été préalablement soudée au bloc (2),
dans lequel le dispositif est en outre conçu de telle sorte que les éléments de chauffage (12) entrent en contact avec au moins une desdites sections, celle qui doit être ajoutée au bloc (2) et celle qui a été préalablement soudée au bloc (2), pour chauffer des bandes de la section, qui est en contact avec les éléments de chauffage (12), jusqu'à atteindre au moins la température de soudure de la section, alors que les éléments de chauffage (12) sont disposés dans l'intervalle entre la section qui doit être ajoutée au bloc (2) et la section qui a été préalablement soudée au bloc (2) et
le dispositif de soudure (9) est en mesure d'effectuer des points de soudure entre la section qui doit être ajoutée au bloc (2) et la section qui a été préalablement soudée au bloc (2) aux positions respectives des bandes chauffées.

4. Dispositif selon la revendication 3, **caractérisé en ce que** les éléments de chauffage (12) sont conçus pour avancer d'avant en arrière relativement au mécanisme de transport du rotor (6).

5. Dispositif selon la revendication 3, **caractérisé en ce que** le dispositif est conçu de telle sorte que les éléments de chauffage (12) entrent en même temps en contact avec à la fois la section qui est ajoutée au bloc (2) et la section qui a été préalablement soudée au bloc (2), afin de chauffer des bandes d'à la fois la section qui doit être ajoutée au bloc (2) ainsi que de la section qui a été préalablement soudée au bloc (2) jusqu'à atteindre au moins la température de soudure,
dans lequel les éléments de chauffage (12) sont disposés dans l'intervalle entre les sections.

6. Dispositif selon la revendication 5, **caractérisé en ce que** les éléments de chauffage (12) sont conçus pour avancer d'avant en arrière relativement au mécanisme de transport du rotor (6).

7. Procédé d'assemblage d'une pluralité de sections d'un matériau thermoplastique, pour former un bloc (2), lequel procédé consiste à :
a) Positionner une section, qui doit être ajoutée au bloc (2), de manière à ce que sa surface supérieure se superpose à la surface supérieure d'une section qui a été préalablement ajoutée au bloc (2) ;
b) Chauffer la première bande jusqu'à atteindre au moins la température de soudure des sections, dans laquelle les premières bandes se situent respectivement sur les surfaces supérieures se faisant face l'une l'autre de la section qui est ajoutée au bloc (2) et de la section qui a été préalablement ajoutée au bloc (2) ;
c) Presser l'une contre l'autre les surfaces supérieures de la section, qui est ajoutée au bloc (2) ainsi que de la section qui a été préalablement ajoutée au bloc (2) de telle sorte que les premières bandes de la section qui a été préalablement ajoutée au bloc (2) ainsi que les premières bandes de la section qui est ajoutée au bloc (2) se joignent respectivement, moyennant quoi la section qui est ajoutée au bloc (2) et la section qui a été préalablement ajoutée au bloc (2) fusionnent thermiquement l'une avec l'autre et la section, qui est ajoutée au bloc (2) devient la dernière section préalablement ajoutée au bloc (2) ;
d) Positionner une section, qui doit être ajoutée au bloc (2), de manière à ce que sa surface supérieure se superpose à la surface supérieure d'une section qui a été préalablement ajoutée au bloc (2) ;
e) Chauffer la deuxième bande jusqu'à atteindre au moins la température de soudure des sections, moyennant quoi les deuxièmes bandes se situent respectivement sur les surfaces supérieures se faisant face l'une l'autre de la section qui est ajoutée au bloc (2) et de la section qui a été préalablement ajoutée au bloc (2) ;
f) Presser l'une contre l'autre les surfaces supérieures de la section qui est ajoutée au bloc (2) ainsi que de la section qui a été préalablement ajoutée au bloc (2) de telle sorte que les deuxièmes bandes de la section qui a été préalablement ajoutée au bloc (2) ainsi que les deuxièmes bandes de la section qui est ajoutée au bloc (2) se joignent respectivement, moyennant quoi la section qui est ajoutée au bloc (2) et la section qui a été préalablement ajoutée au bloc (2) fusionnent thermiquement l'une avec l'autre et la section, qui est ajoutée au bloc (2) devient la dernière section préalablement ajoutée au bloc (2) ;
g) Répéter continuellement les étapes a) à f) en utilisant plusieurs autres sections.

8. Procédé selon la revendication 7, **caractérisé en ce que** le chauffage du bloc (2) atteint au moins le point de déformation et d'expansion thermique, de manière à transformer le bloc (2) en un matériau alvéolé.

9. Procédé selon la revendication 7, **caractérisé en ce que** les sections désignent des tissus duveteux thermoplastiques.

10. Procédé selon la revendication 7, **caractérisé en ce que** le pressage des surfaces supérieures de la section qui est ajoutée au bloc (2) et de la section qui a été préalablement ajoutée au bloc (2) est provoqué par l'action d'un rotor (6) et au même moment par la rotation du rotor sur au moins une des sections, celle qui doit être ajoutée au bloc (2) ou celle qui a été préalablement ajoutée au bloc (2).

11. Procédé selon la revendication 10, **caractérisé en ce que** les sections contiennent des fibres de duvet thermoplastique.
